(19) Europäisches Patentamt
European Patent Office
Office européen des brevets

(11) **EP 1 883 184 A1**

(12) **EUROPEAN PATENT APPLICATION**

(43) Date of publication:
**30.01.2008 Bulletin 2008/05**

(51) Int Cl.:
***H04L 12/56*** *(2006.01)*

(21) Application number: **06118143.4**

(22) Date of filing: **28.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **NTT DoCoMo, Inc.**
**Tokyo (JP)**

(72) Inventors:
• **Tschopp, Dominique**
**1005, Lausanne (CH)**

• **Widmer, Jörg**
**81539, München (DE)**
• **Diggavi, Suhas**
**1005, Lausanne (CH)**
• **Grossglauser, Matthias**
**1018, Lausanne (CH)**
• **Prehofer, Christian**
**81477, München (DE)**

(74) Representative: **Betten & Resch**
**Patentanwälte**
**Theatinerstrasse 8**
**80333 München (DE)**

(54) **Method and apparatus for routing a message**

(57) A method for routing a message from a source to a destination through a network along a routing path comprising a plurality of nodes, said method comprising: choosing the next hop to which a node along the path forwards the message randomly whereas the randomness is biased such that nodes which according to a distance measure are closer to the destination have a higher probability of being selected as next hop than nodes which are less close to the destination.

**Fig. 2**

**Description**

**FIELD OF INVENTION**

The present invention relates to a method and an apparatus for routing a message.

**BACKGROUND OF THE INVENTION**

Ad hoc networks are wireless networks with no central infrastructure. All nodes act as terminals, but also as relay routers. More precisely, this means that a node trying to communicate with another node outside its radio range will send its packets to one of its neighboring nodes, which in turn will forward the packets to its neighbors and so on, until the packet reaches the destination. This immediately raises the following question: how can a node, which only knows the destination's identifier, know to whom it needs to forward its packets to reach that destination?

Typically, one wants to route on the shortest possible path to the destination, which implies a minimal use of network resources such as bandwidth, power, etc. and minimizes the control overhead (i.e., all packets necessary to find and maintain these paths). The main paradigms for routing algorithms for ad hoc networks either utilize the link-based communication graph (topology) or the geometry of the wireless nodes (geographic routing). Topology-based routing takes into account the existence of complex communication channels but does not utilize the inherent geometry in a wireless network. It relies on variations of internet protocols, such as "Bellman-Ford" or "Link State Routing" to establish and maintain paths which are then stored in routing tables. (see e.g. C. E. Perkins and P Bhagwat, Highly dynamic des tin ation-sequen ced distance-vector routing (DSDV) for mobile computers, In ACM SIGCOMM 94, pages 234-244, London, 1994, or T Clausen, P. Jacquet, A. Laouiti, P Muhlethaler, a. Qayyum, and L. Viennot, Optimized link state routing protocol, In IEEE INMIC, Pakistan, 2001.) With geographic routing, packets are routed based on the geographic positions of nodes (see e.g G.G. Finn, Routing and addressing problems in large metropolitan-scale internetworks, ISI Research Report ISU/RR-87-180, March 1987, or P Bose, P Morin, I. Stojmenovic and J. Urrutia, Routing with guaranteed delivery in ad hoc wireless networks, ACM Wireless Networks, November 2001.)

Typically, packets are forwarded greedily to the final destination. This means that the routing mechanism tries in each routing step to get as close to the destination as possible, or in other words, it forwards the packet to the node that provides the largest progress.

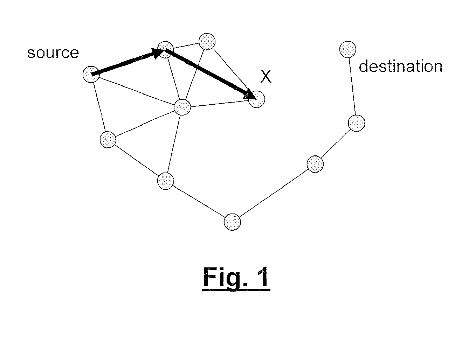

The limitation of topology-based routing is that route discovery and maintenance are based on flooding and are expensive in terms of overhead, in particular in mobile and uncertain environments in which it is hard to maintain a stable end-to-end route. Geographic routing instead relies heavily on the geometry, ignoring complex link behavior. The intuition behind greedy forwarding is that the geographic coordinates of the devices are a good approximation of the network topology. However, this is not always true, and packets can get stuck in so called dead-ends (i.e., a node is reached which has no neighbor geographically closer to the destination than itself). This is schematically illustrated in Fig. 1, where the topology causes the packet to get stuck at node X because there is no node to which node X is connected and which would be closer to the destination than node X itself. Such dead-ends require costly recovery procedures, which should be avoided. Geographic routing also requires every node to know its own position. It is commonly assumed that nodes are equipped with some form of positioning hardware, such as for instance a "Global Positioning System (GPS)" device However, such devices can be expensive and/or consume too much power for battery-life limited nodes. Further, the channel quality is not necessarily a function of the distance between nodes, due to multipath scattering for instance.

To avoid the disadvantages of topology-based and geographic routing, it is also possible to do routing based on virtual coordinates of nodes, instead of real geographic coordinates. Such coordinates are usually assigned to nodes based on the underlying connectivity graph (i.e., nodes that are direct neighbors or connected through few intermediate hops have similar coordinates). Virtual coordinates can lead to more optimal routing schemes, as nodes which require fewer resources to communicate are placed close together in the virtual coordinate system. Such a virtual coordinate system representing the topology of a network through virtual coordinates is called an embedding. Several approaches have been proposed for embedding connectivity graphs in ad hoc networks, one being for example described in James Newsome and Dawn Song, GEM: graph embedding for routing and data-centric storage in sensor networks without geographic information. In 1st international conference on embedded networked sensor systems, 2003.

However, the embeddings obtained by such approaches are not able to create a co-ordinate system which allows greedy routing all the time. Local disordering of nodes can lead to packets getting stuck in a dead-end, where no neighbour has virtual co-ordinates that allow the packet to make progress, even though the optimal next hop is a neighbour (similarly to what happens with real co-ordinates). Typically, connectivity graph embeddings guarantee that nodes are placed roughly at the right place i.e., nodes far apart in the topology are also geometrically well separated. However, small local perturbations can lead to very poor routing performance and so-called local disordering.

In order to avoid loosing the blocked packets, the typical paradigm is to start a search for a node closer to the destination than the dead-end, and then restart greedy routing.

Face routing techniques, such as GOAFR+ or GPSR use greedy routing whenever possible (see e.g. Kuhn, F., et al., Geometric Ad-Hoc Routing: Of Theory and Practice. Proceedings of the Annual ACM Symposium on Principles of Distributed Computing, 2003. 22: p. 63, or Karp, B. and H.T. Kung, GPSR: Greedy Perimeter Stateless Routing for wireless networks. Proceedings of the Annual International Conference on Mobile Computing and Networking, MOBICOM, 2000: p. 243).

When a packet gets stuck, the connectivity graph is locally planarized and the right hand rule is used to route along the face around an obstacle or void until a node is found which can again use greedy routing. The fallback conditions to greedy routing as well as the search procedure depend on the specificities of the algorithms. It should be noted that a planarization as proposed in Kuhn et al. or Karp et al. requires a unit disc graph in two dimensions. Face routing techniques are worst case optimal but are only applicable to unit disc graphs (UDG) i.e., connectivity graphs in which nodes are neighbors if they are within a given distance and disconnected otherwise. These approaches are furthermore only applicable to low dimensional coordinate systems, which make them impracticable for common embeddings. Additionally, the overhead incurred can be significant (as high as $O(d^2)$, where d is the length of the shortest path between the source and the destination).

Methods for non-UDG are based on local floods and also lead to a significant overhead in terms of control messages.

There have been proposals for so-called probabilistic routing schemes, such as those presented in "Biswas, S. and R. Morris, Opportunistic routing in multi-hop wireless networks SIGCOM, Computer Commun. Rev., 2004. 34 (1): p. 69-74", or in "Zorzi, M. and R.R. Rao, Geographic random forwarding (GeRaF) for ad hoc and sensor networks: multihop performance. Mobile Computing, IEEE Transactions on, 2003. 2(4): p. 337-348". They are random in the sense that the receivers of a packet contend to forward it. A node broadcasts a message to all its neighbors. One possibility is that the neighbors then rebroadcast this message with a random delay, depending on the distance to the target. If a node overhears another neighbor resending the message, it decides to give up. It should be noted that this can lead to duplicate packets. While the authors want to avoid that the sender needs to know the coordinates of the nodes in its neighborhood their approach does not solve the problem of dead ends at low communication costs.

The mechanisms for dealing with non-optimal routing due to dead ends or packets getting stuck all have disadvantages. It is therefore desirable to have a more robust routing mechanism which can tackle the problem of dead ends at low costs in terms of communication overhead

## SUMMARY OF THE INVENTION

According to one embodiment there is provided a method for routing a message from a source to a destination through a network along a routing path comprising a plurality of nodes, said method comprising:

> choosing randomly the next hop to which a node along the path forwards the message whereas the randomness is biased such that nodes which according to a distance measure are closer to the destination have a higher probability of being selected as next hop than nodes which are less close to the destination.

Such a routing approach may be referred to as biased random walk routing (hereinafter referred to as BRW) and it is a geographic routing algorithm which can particularly be applied to handle coordinate systems in which the nodes are roughly at the correct position i.e., nodes far away in the topology are far away in the embedding, but in which some local ordering errors occur. Such a coordinate system can be obtained either by embedding the connectivity as explained above, or by using the real coordinates (GPS) in a dense network. Real coordinates are prone to be noisy, but under the assumption that the topology is dense, no large void should be present. In this setting, forwarding packets could lead to dead-ends with greedy routing but is transparently avoided with BRW. In BRW, the next hop is chosen randomly among all neighbors (or the nodes to which the forwarding node has a connection).

The basic notion of this approach is to choose the next hop randomly, while the randomness is biased towards the hop which is closest to the destination.

According to one embodiment there is provided a method for routing a message from a source to a destination through a network along a routing path comprising a plurality of nodes, said method comprising:

> choosing the next hop to which a node along the path forwards the message according to a probabilistic function such that a node being closest to the target is preferred as next hop but at least one node being more distant from the target than the closes node still has a non-zero probability of being chosen.

This approach is slightly different from the aforementioned one in the sense that according to the basic notion of this approach the hop closest to the destination is in principle chosen as the one with the highest probability according to some probabilistic function, but there is introduced some degree of randomness by a probabilistic function which assigns a non-zero probability to at least one node other than the node closest to the destination.

Both aforementioned approaches reflect a similar basic idea solving the same problem by introducing biased randomness to the selection of a next node. While in the first approach the next hop is chosen randomly with some bias towards the destination, in the second approach a hop close to the destination is selected with some biased randomness allowing for the selection of other nodes (different from the one closest to the destination) with non-zero probability.

According to one embodiment nodes which according to some distance measure are closer to the destination than the current node have a higher probability of being selected as next hop than nodes which are more distant to the destination than the current node.

This gives the nodes closer to the destination than the present node a higher weight but still assigns a non-zero probability to nodes lying in the opposite direction.

This allows the forwarding to nodes even in the "backward" direction, in other words towards the source rather than towards the destination. This opens the possibility to find a next hop even in case of a dead end without having to use a "flooding" mechanism.

According to one embodiment the distance measure is based on one of the following:

geographic coordinates indicating the geographic position of the nodes;
virtual coordinates derived from the connectivity of the nodes.

According to one embodiment nodes which are geographically (or according to some other distance measure like virtual coordinates derived from an embedding) closer to the destination than the current node have a higher probability of being selected as next hop.

The embodiments of the invention are applicable to all kinds of distance metrics, let them be based on geographic coordinates or on virtual coordinates inferred from connectivity.

According to one embodiment the method comprises:

storing a list of the last visited nodes, and
reducing or nullifying the probability of returning to these nodes.

This significantly reduces the occurrence of infinite loops by reducing the probability of visiting the same node several times by storing (a possibly constant size) list of the last visited nodes and reducing or nullifying the probability of returning to these nodes.

According to one embodiment the method comprises:

providing a degree of randomness indicating the probability with which nodes other than the node closest to the destination are chosen as next hop.

By introducing (and possibly adjusting) the degree of randomness one achieves a deviation from the greedy routing which increases the overall stability of the routing mechanism.

According to one embodiment the degree of randomness depends on one or more of the following:

the level of confidence in the coordinates of the nodes;
the stability of the coordinates of the nodes or the stability of an embedding.

This makes it possible to adjust the mechanism to the circumstances of the network.

According to one embodiment the probability of a node being chosen may be determined based on the probabilities or degrees of randomness determined for nodes through which said message has already traveled. This allows to take into account the probability values along the path of the packet.

According to one embodiment the method further comprises:

determining an initial path from said source to said target using said routing scheme; and
forwarding further messages or packets from said source to said destination along the thus determined path.

This may make use of a stable path which was determined through probabilistic routing.

The paradigm on which the embodiments of the present invention is based is that there is no complete "trust" in the co-ordinate system. Rather some randomness is introduced in all routing decisions in order to cope with the co-ordinate system's imperfections, be it virtual or real. These considerations apply to routing on real coordinates, where the location system from which these co-ordinates are obtained has a relatively coarse accuracy (i.e., errors on the order of the radio range), and to virtual co-ordinates inferred from connectivity.

Probabilistic routing is a new routing paradigm which trades-off path length for robustness. In order to avoid the overhead expensive recovery procedures, probabilistic routing sometimes makes local but apparently suboptimal decisions. Such a scheme is extremely efficient when nodes have small errors in their positions. In that situation, it makes the small local disordering transparent to the routing algorithm. Making random decisions with a bias in the direction of the target will lead to slightly longer routes, but the local randomness will replace more expensive searches and on average lead to a good route.

## DESCRIPTION OF THE DRAWINGS

Fig. 1 illustrates a situation where a packet gets stuck using a routing mechanism of the prior art.
Fig. 2 schematically illustrates the routing of a packet according to an embodiment of the invention.

## DETAILED DESCRIPTION

In the following, embodiments of the routing mechanism will be described in detail by referring to the accompanying drawings. The routing mechanism itself may be referred to as biased random walk routing (hereinafter referred to as BRW).

Table 1 summarizes notations used throughout the following description

Table 1: Table of Notations

| i | unique identifier of a node |
|---|---|
| $x_j$ | virtual coordinates of node j |
| $E_{ij} = \|x_i - x_j\|$ | Euclidean distance between i and j in the virtual space |
| $N_i$ | one-hop neighbors of i (excluding i) |

Now the routing mechanism according to one embodiment for deciding to which node among its one-hop neighbors a node should forwarded a packet will be described.

A packet originates or arrives at node s. The packet contains in its header the position of a target node t. The current node s must forward this packet to one of its neighbors (node to which it can talk directly). Node s knows the positions of its neighbors. To decide which neighbor it forwards the packet to, it follows the steps below:

It calculates, for every neighbor, the difference between the distance of the neighbor to the target and itself to the target (the Euclidean distance based on the coordinates of the nodes). For example, if s is at a distance of 10 from the target and the first neighbor at a distance of 8, it stores the value 2 for the first neighbor. Note that if a neighbor is farther away than s, its value will be negative.

The calculation of the distance difference may be expressed as follows:

$$\Delta_j = E_{st} - E_{jt}.$$

Node s then chooses probabilistically which node to forward the packet to. The probability of choosing a neighbor is based on the distance difference calculated before. According to one embodiment, the larger this value, the higher the probability.

The probability of choosing node j as a next hop may be expressed as:

$$p_j = \frac{f(\Delta_j)}{\sum_{k \in N_s} f(\Delta_k)}$$

Here the numerator is a function which expresses the bias (the probability for the node being chosen) depending on the amount of how close the packet would get into the direction of the target if this node would be chosen (the "distance leap"). The denominator is for normalizing the probability by summing up the individual probabilities for all distance leaps of the neighboring nodes.

The function f expressing the probability may be any function which gives a bias towards the target, e.g. an exponential function, or any other function which defines a bias towards the target and gives a non-zero but less than one probability for nodes other than the node closest to the destination.

In one embodiment the function f may e.g. be a step function assigning a probability of a fixed value of less than 1, e.g. a value of 0.8, whereas a probability value of 0.13 is assigned to the node having the second largest distance difference and the probability of 0.07 is assigned to the node having the third largest distance difference.

The actual function f which is chosen may depend on the particular embodiment and a wide variety of functions implementing a biased random walk routing which is biased towards the destination can be imagined.

According to one embodiment one can additionally reduce the probability of visiting the same node several times. For this, the packet may contain a list of the last visited nodes (e.g. the 10 last nodes). Then, the probability calculated for the neighbouring nodes can be reduced if a neighbour is already in this list. For instance, one may imagine that the second neighbour has been visited 2 times (i.e. it appears two times in the list of the 10 past visited nodes), then one could for instance divide the probability of choosing this node by 4 (2 to the power 2).

The probability of choosing node j under consideration of information about the previous path may be mathematically expressed as follows:

$$p_j = \frac{f(\Delta_j, path)}{\sum_{k \in N_r} f(\Delta_k, path)}$$

whereas the function in the numerator has as an additional parameter *path* with some indication of previous occurrences of the node in the path. More concretely this may in one embodiment look as follows:

$$f(\Delta_j, path) = \frac{e^{\alpha \Delta}}{2^m}$$

where $\alpha$ is a parameter determining the "greediness" of the routing and m is the number of times node j appears in the path.

In this example the next hop (or better its probability of being chosen) is determined according to an exponential distribution. The probability of choosing a neighbor is proportional to e (approx. 2.71828) to the power of the value calculated as the distance difference, divided by 2 to the power of the number of times the node was already visited. The higher the parameter alpha, the more weight is given to large values of the distance difference which means the "greedier" the routing algorithm is towards distance gains.

It should be noted that when $\alpha$ goes to 0, the routing algorithm simply performs a random walk. As mentioned, when $\alpha$ becomes large enough, BRW routing is equivalent to greedy routing (in this case the path is not taken into account). The next hop is a sample drawn according to the distribution given in the penultimate equation.

According to one embodiment one may say that the routing mechanism prefers a next hop which is closest to the destination according to some distance measure, but there is provided a degree of randomness which introduces a non-zero chance for other nodes than the one closest to the destination to be chosen. This may be expressed by a function or parameter introducing a "randomness degree" which assigns a probability of less than one to the next hop closest to the destination and a probability larger than zero to at least one other node.

As mentioned before, this may be implemented by any function such as a step function or an exponential function having a parameter ($\alpha$) expressing a degree of randomness.

Randomness can be either determined for a complete path or on a per hop basis. In case of the degree of randomness being determined for the complete path the randomness parameter ($\alpha$) may be forwarded from the source together with the packet towards the destination.

According to one embodiment, the degree of randomness ($\alpha$) can be adapted to the level of confidence one has in the embedding (i.e., the quality and stability of the embedding or the coordinates). The quality of the embedding can be measured for example by analyzing the packet delivery ratio to a given destination (which requires acknowledgement packets or some other form of feedback) or the frequency with which packets get stuck in a dead-end at a given node or one of its neighbors (which may require local communication to disseminate this information). The stability of an embedding can be estimated by measuring how much the coordinates of a node change over time. In case of a low quality embedding it may be desirable to have a higher degree of randomness. The same holds for a less stable embedding. For implementing such a mechanism there may be a predefined evaluation scheme which evaluates the stability measurement and/or the confidence level of the embedding and based on the measurement result the degree of randomness may be adapted (increased or decreased). In highly stable embeddings the randomness degree may be decreased, thereby increasing the "greediness" and in less stable embeddings the randomness parameter may be increased thereby decreasing the efficiency but increasing the stability of the routing mechanism.

Moreover, the closer a packet is to its final destination, the less likely it is that large detours will be beneficial. According to one embodiment one may therefore adapt the degree of randomness to the remaining distance to the destination (i.e., increase $\alpha$ when $E_{st}$ is small).

Furthermore, according to one embodiment probabilistic forwarding may be used uniquely for an initial path setup to then use deterministic routing along this path for the forwarding of the rest of the data packets.

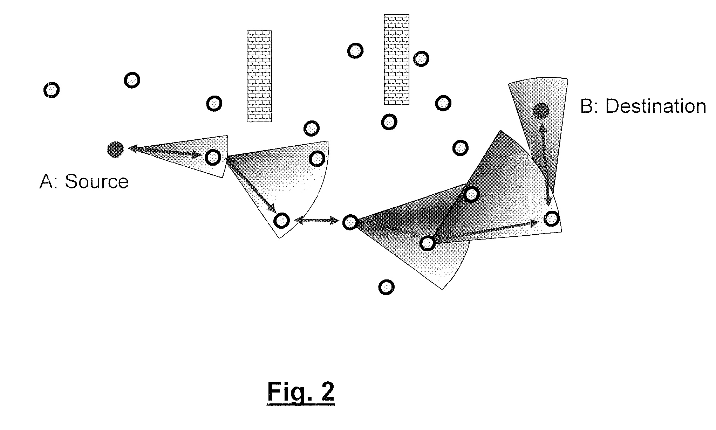

Fig. 2 schematically illustrates the routing of a packet from a source towards a destination using such a probabilistic routing mechanism as described before. In Fig. 2 one can see that at each node from the source towards the destination there is a certain area which includes several possible nodes which may be chosen as next hops. Each node lying within the pie-shaped area has a certain probability of being chosen. This has the effect that even if the packet gets stuck at one of the walls also indicated in Fig. 2, there would be a possibility of overcoming such a situation without applying a flooding because a node which is not closer than the present node may also have a certain probability of being chosen. For that purpose, however, it should be noted that the pie-shaped area should be somewhat extended such that also nodes lying behind the present node may be included.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a node in a network which is suitably programmed such that it is able to carry out a routing algorithm as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

Embodiments of the invention may be implemented e.g. by nodes in a network which are programmed to operate in accordance with the routing mechanisms as described before.

**Claims**

1. A method for routing a message from a source to a destination through a network along a routing path comprising a plurality of nodes, said method comprising:

    randomly choosing the next hop to which a node along the path forwards the message, whereas the randomness is biased such that nodes which according to a distance measure are closer to the destination have a higher probability of being selected as next hop than nodes which are less close to the destination.

2. A method for routing a message from a source to a destination through a network along a routing path comprising a plurality of nodes, said method comprising:

    choosing the next hop to which a node along the path forwards the message according to a probabilistic function such that a node being closest to the target is preferred as next hop but at least one node being more distant from the target than the closest node still has a non-zero probability of being chosen.

3. The method of claim 1 or 2, wherein
   nodes which according to some distance measure are closer to the destination than the current node have a higher probability of being selected as next hop than nodes which are more distant to the destination than the current node.

4. The method of claim 1, 2 or 3, wherein the distance measure is based on one of the following:

    geographic coordinates indicating the geographic position of the nodes;

virtual coordinates derived from the connectivity of the nodes.

**5.** The method of one of the preceding claims, further comprising:

storing a list of the last visited nodes, and
reducing or nullifying the probability of returning to these nodes.

**6.** The method of one of the preceding claims, comprising:

providing a degree of randomness indicating the probability with which nodes other than the node closest to the destination are chosen as next hop.

**7.** The method of claim 6, wherein said degree of randomness depends on one or more of the following:

the level of confidence in the coordinates of the nodes;
the stability of the coordinates of the nodes or the stability of an embedding.

**8.** The method of one of the preceding claims, wherein
the probability of a node being chosen may be determined based on the probabilities or degrees of randomness
determined for nodes through which said message has already traveled.

**9.** The method of one of the preceding claims, further comprising:

determining an initial path from said source to said target using said routing scheme; and
forwarding further messages or packets from said source to said destination along the thus determined path.

**10.** An apparatus for routing a message from a source to a destination through a network along a routing path comprising
a plurality of nodes, said apparatus comprising:

a module for choosing the next hop to which a node along the path forwards the message randomly whereas
the randomness is biased such that nodes which according to a distance measure are closer to the destination
have a higher probability of being selected as next hop than nodes which are less close to the destination.

**11.** An apparatus for routing a message from a source to a destination through a network along a routing path comprising
a plurality of nodes, said apparatus comprising:

a module for choosing the next hop to which a node along the path forwards the message according to a
probabilistic function such that a node being closest to the target is preferred as next hop but at least one node
being more distant from the target than the closes node still has a non-zero probability of being chosen.

**12.** The apparatus of claim 10 or 11, wherein
nodes which according to some distance measure are closer to the destination than the current node have a higher
probability of being selected as next hop than nodes which are more distant to the destination than the current node.

**13.** The apparatus of claim 10, 11 or 12, wherein the distance measure is based on one of the following:

geographic coordinates indicating the geographic position of the nodes;
virtual coordinates derived from the connectivity of the nodes.

**14.** The apparatus of one of claims 10 to 13, further comprising:

a module for storing a list of the last visited nodes, and
reducing or nullifying the probability of returning to these nodes.

**15.** The apparatus of one of claims 10 to 14, comprising:

a module for providing a degree of randomness indicating the probability with which nodes other than the node
closest to the destination are chosen as next hop.

**16.** The apparatus of claim 15, wherein said degree of randomness depends on one or more of the following:

> the level of confidence in the coordinates of the nodes;
> the stability of the coordinates of the nodes or the stability of an embedding.

**17.** The apparatus of one of claims 10 to 16, wherein
the probability of a node being chosen may be determined based on the probabilities or degrees of randomness determined for nodes through which said message has already traveled.

**18.** The apparatus of one of claims 10 to 17, further comprising:

> a module for determining an initial path from said source to said target using said routing scheme; and
> a module for forwarding further messages or packets from said source to said destination along the thus determined path.

**19.** A computer program comprising computer program code which when being executed on a computer enables said computer to carry out a method according to one of claims 1 to 9.

<u>Fig. 1</u>

A: Source

B: Destination

**Fig. 2**

EP 1 883 184 A1

**European Patent Office**

**EUROPEAN SEARCH REPORT**

Application Number

EP 06 11 8143

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/05495 A (BRITISH TELECOMMUNICATIONS PUBLIC LIMITED COMPANY; TATESON, JANE, ELIZ) 17 January 2002 (2002-01-17) * abstract; claims 1,2,6 * | 1-4, 10-13,19 | INV. H04L12/56 |
| X | US 2004/146007 A1 (SAADAWI TAREK ET AL) 29 July 2004 (2004-07-29) <br><br> * abstract * <br> * paragraphs [0001], [0012], [0041], [0050], [0005] - [0061], [0070], [0072]; claims 1,6,14,15 * | 1-4,6, 8-13,15, 17-19 | |
| A | US 2005/169238 A1 (YANG FAN ET AL) 4 August 2005 (2005-08-04) * abstract; claims 1,2 * | 1-4, 10-13 | |
| A | WO 2004/045166 A (TELENOR ASA; CANRIGHT, GEOFFREY) 27 May 2004 (2004-05-27) * abstract * * page 15, line 12 - line 24; claim 1 * | 1,2,10, 11 | |
| A | ROTH M: "Routing for mobile wireless ad hoc networks" TERMITE, 26 March 2002 (2002-03-26), XP002974349 * the whole document * | 1-19 | **TECHNICAL FIELDS SEARCHED (IPC)** <br><br> H04L |
| A | FREY H: "SCALABLE GEOGRAPHIC ROUTING ALGORITHMS FOR WIRELESS AD HOC NETWORKS" IEEE NETWORK, IEEE SERVICE CENTER, NEW YORK, NY, US, vol. 18, no. 4, July 2004 (2004-07), pages 18-22, XP001220889 ISSN: 0890-8044 * the whole document * | 1-19 | |

The present search report has been drawn up for all claims

| Place of search | Date of completion of the search | Examiner |
|---|---|---|
| Munich | 12 October 2006 | JIMENEZ HERNANDEZ, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 11 8143

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2006

| Patent document cited in search report | | Publication date | Patent family member(s) | | Publication date |
|---|---|---|---|---|---|
| WO 0205495 | A | 17-01-2002 | AU<br>CA<br>US | 6774601 A<br>2414357 A1<br>2003174654 A1 | 21-01-2002<br>17-01-2002<br>18-09-2003 |
| US 2004146007 | A1 | 29-07-2004 | US<br>WO | 2005286464 A1<br>2004068870 A2 | 29-12-2005<br>12-08-2004 |
| US 2005169238 | A1 | 04-08-2005 | EP<br>WO | 1709770 A1<br>2005074197 A1 | 11-10-2006<br>11-08-2005 |
| WO 2004045166 | A | 27-05-2004 | AU<br>CN<br>EP<br>JP<br>NO<br>US | 2003282637 A1<br>1736065 A<br>1579639 A1<br>2006506843 T<br>318843 B1<br>2006031576 A1 | 03-06-2004<br>15-02-2006<br>28-09-2005<br>23-02-2006<br>09-05-2005<br>09-02-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. E. PERKINS ; P BHAGWAT.** Highly dynamic des tin ation-sequen ced distance-vector routing (DSDV) for mobile computers. *ACM SIGCOMM,* 1994, vol. 94, 234-244
- **T CLAUSEN ; P. JACQUET ; A. LAOUITI ; P MUHLETHALER ; A. QAYYUM ; L. VIENNOT.** Optimized link state routing protocol. *IEEE INMIC,* 2001
- **G.G. FINN.** Routing and addressing problems in large metropolitan-scale internetworks. *ISI Research Report ISU/RR-87-180,* March 1987
- **P BOSE ; P MORIN ; I. STOJMENOVIC ; J. URRUTIA.** Routing with guaranteed delivery in ad hoc wireless networks. *ACM Wireless Networks,* November 2001
- **JAMES NEWSOME ; DAWN SONG.** GEM: graph embedding for routing and data-centric storage in sensor networks without geographic information. *1st international conference on embedded networked sensor systems,* 2003
- **KUHN, F et al.** Geometric Ad-Hoc Routing: Of Theory and Practice. *Proceedings of the Annual ACM Symposium on Principles of Distributed Computing,* 2003, vol. 22, 63
- **KARP, B. ; H.T. KUNG.** GPSR: Greedy Perimeter Stateless Routing for wireless networks. *Proceedings of the Annual International Conference on Mobile Computing and Networking, MOBICOM,* 2000, 243
- **BISWAS, S. ; R. MORRIS.** Opportunistic routing in multi-hop wireless networks SIGCOM. *Computer Commun. Rev,* 2004, vol. 34 (1), 69-74
- **ZORZI, M. ; R.R. RAO.** Geographic random forwarding (GeRaF) for ad hoc and sensor networks: multihop performance. *Mobile Computing, IEEE Transactions,* 2003, vol. 2 (4), 337-348